# EUROPÄISCHE PATENTSCHRIFT

(11) **EP 1 398 225 B1**
(45) Veröffentlichungstag und Bekanntmachung des Hinweises auf die Patenterteilung: **15.11.2006**
(21) Anmeldenummer: 03019111.8
(22) Anmeldetag: 23.08.2003
(51) Int. Cl.: B60R 21/06

(54) **Kfz-Sicherheitseinrichtung, insbesondere Trennnetz**
Motor vehicle safety equipment, especially separation net
Equipement de sécurité pour voiture, en particulier filet de séparation

(30) Priorität: 12.09.2002 DE 10242510
(43) Veröffentlichungstag der Anmeldung: 17.03.2004
(73) Patentinhaber: BOS GmbH & Co. KG, 73760 Ostfildern (DE)
(72) Erfinder: Zummack, Wolfram, 53842 Troisdorf (DE)
(74) Vertreter: Patentanwälte Ruff, Wilhelm, Beier, Dauster & Partner

(56) Entgegenhaltungen:
- EP-A- 0 649 778
- DE-A- 4 010 209
- DE-A- 19 940 602
- DE-C- 19 735 463
- "TAPERED RUBBER TUBE ABSORBS TEST-SLED IMPACT" MACHINE DESIGN, PENTON,INC. CLEVELAND, US, Bd. 43, Nr. 23, 16. September 1971 (1971-09-16), Seite 161, XP002031633 ISSN: 0024-9114

## Beschreibung

Die Erfindung betrifft eine Kfz-Sicherheitseinrichtung, insbesondere ein Kfz-Trennnetz, gemäss dem Oberbegriff des Anspruches 1.

Bekannte Kfz-Trennnetze weisen üblicherweise eine untere und eine obere Haltestange auf, zwischen denen sich eine netzartige Werkstoffbahn befindet. Das Trennnetz kann zwischen einer eingefahrenen Ruhelage, in der das Netz auf einer mit einer Rückstellkraft in Einfahrrichtung federbelasteten Wickelwelle innerhalb eines Gehäuses komprimiert aufbewahrt wird, und einer ausgezogenen Arbeitsposition verlagert werden. In der Arbeitsposition verschliesst das Netz die in einem Kfz zwischen dem oberen Rand der Kfz-Fondlehne und dem Dachhimmel verbleibende Öffnung. Die Erfindung bezieht sich dabei nicht nur ausschliesslich auf Kfz-Trennnetze, sondern kann auch Verwendung beispielsweise bei Kfz-Laderaumabdeckungen etc. finden.

Die bekannten Kfz-Trennnetze dienen dazu, im Falle starker Beschleunigungen des Kfz, wie sie beispielsweise im Falle eines Crashs auftreten, zu verhindern, dass die in einem Laderaum des Kfz befindlichen Gegenstände in die Fahrgastzelle hineingeschleudert werden. Die obere Haltestange wird beim Stand der Technik in fahrzeugseitige Befestigungen eingehängt. Hierzu sind an der Haltestange Befestigungselemente vorgesehen, die beispielsweise sich pilzartig erweiternde Endstücke zur Anbringung in fahrzeugseitigen Aufnahmenuten vorsehen.

Die im Falle eines Crashs auftretenden Kräfte sind verständlicherweise enorm, so dass verhindert werden muss, dass sich die Haltestangen übermässig stark durchbiegen und das Trennnetz seine Sicherheitsfunktion verliert. Gleichermassen soll natürlich auch verhindert werden, dass die Haltestangen brechen oder reissen. Es soll gegebenenfalls auch verhindert werden, dass die gesamte Energie auf die fahrzeugseitigen Befestigungsstellen übertragen wird. lm Stand der Technik sind bereits verschiedene Versuche vorgenommen worden, dem Trennnetz energieverzehrende Mittel zuzuordnen. Eine besondere Problematik besteht dabei darin, dass die Zugstange zwangsläufig ein rohrförmiger, hohler Körper ist, in dem Befestigungselemente oder zumindest ein mit dem Befestigungselement verbundener Träger axial verschieblich aufgenommen wird, so dass schon bereits aufgrund des geringen zur Verfügung stehenden Raumes die Anordnung energieverzehrender Elemente besondere Probleme bereitet.

In der DE 40 10 209 A1 wird vorgeschlagen, energieverzehrende Mittel an der Haltestange eines Trennnetzes durch Einschnürung des rohrförmigen Körpers bereitzustellen, wobei ein sich konisch nach innen erweiterndes Endstück vorgesehen ist, welches die sickenartigen Einprägungen des Rohres im Crashfall verformt. Problematisch sind hier Fertigungs- und Montagetoleranzen der Sickenprägung, da die exakten Verformungskräfte und deren Weiterleitung unmittelbar von den Toleranzen abhängen. Ausserdem ist es grundsätzlich nachteilig, wenn das Halterohr der Zugstange, also der rohrförmige Körper, selbst verformt wird, weil hierdurch die Gefahr einer Überbeanspruchung des Rohres, gegebenenfalls auch eines Brechens des Rohres im Crashfalle durch Schwächung des Rohres, nämlich durch Verringerung der Knicksteifigkeit, noch erhöht wird.

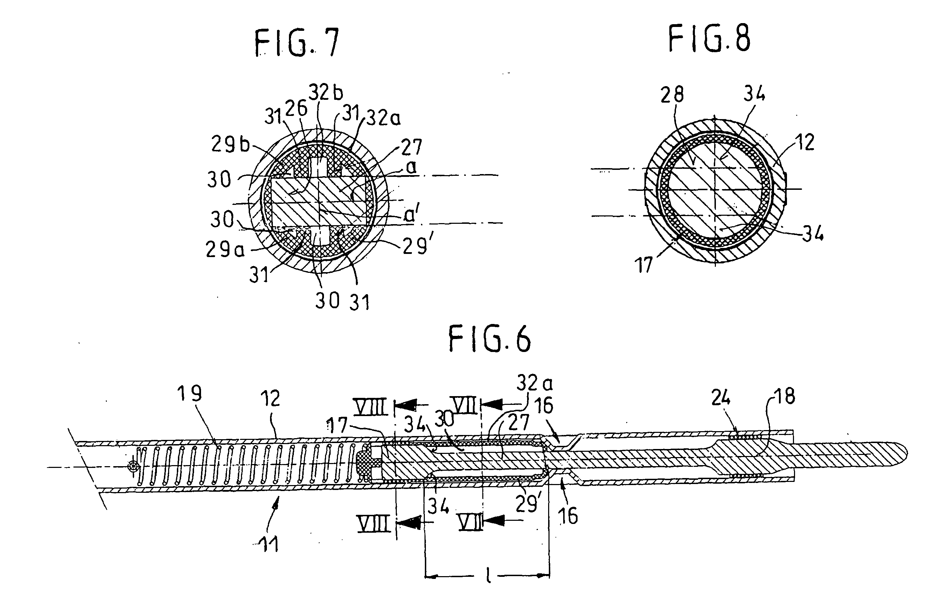

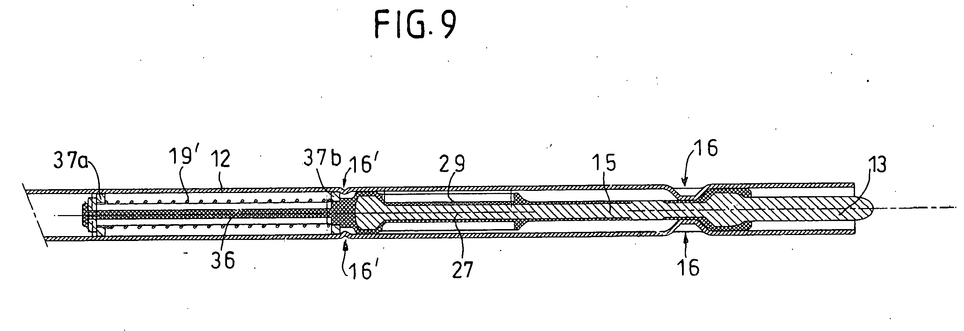

Diese Problematik erkennt bereits die EP 0 649 778 B1, die zur Verbesserung der energieverzehrenden Mittel einen gesonderten Deformationskörper vorschlägt, der entweder Bestandteil eines Einsatzstückes oder, gemäss dem Ausführungsbeispiel der Figuren 8 und 9, ein zylindrisches, gesondertes Rohr sein kann. Der Halter weist hier an seinem inneren Ende zwei sich diametral gegenüberliegende radiale Fortsätze auf, die durch Einprägen des Schaftes entstanden sind. Der über die Aussenumfangsfläche des Schaftes vorstehende Teil besitzt etwa halbkreisförmige Gestalt. Die beiden radialen Vorsprünge bilden gleichzeitig die Anschlagglieder, die verhindern, dass das Halteglied aus der Zugstange herausfällt. Im Falle eines Crashs beginnen die radialen Fortsätze sich zunehmend einen Weg durch den Deformationskörper zu bahnen, in dem sie sich in die Wand des kegeligen Bohrungsabschnitts eingraben. Die Situation im Falle eines Crashs, also das Hindurchgleiten der radialen Vorsprünge durch den Deformationskörper hindurch, ist in den Figuren 7 und 9 dargestellt. Der Deformationskörper stützt sich bei sämtlichen Ausführungsbeispielen der EP 0 649 778 B1 an einem gesonderten Bauelement in Form eines Stahlringes ab.

Der Erfindung liegt ausgehend von dem zuletzt geschilderten Stand der Technik zugrunde, die bekannte Kfz-Sicherheitseinrichtung derart weiterzubilden, dass bei verbesserter Energieverzehrung eine vereinfachter Bauweise möglich wird.

Die Erfindung löst diese Aufgabe mit den Merkmalen des Anspruches 1, und ist demgemäss dadurch gekennzeichnet, dass das verdickte Ende senkrecht zur Rohrachse gesehen eine gegenüber einer ersten Querschnittsfläche des Axialabschnittes stark vergrößerte, im wesentlichen kreisförmige zweite Querschnittsfläche aufweist, dass im Crashfall die Einschnürung unmittelbar ein Widerlager für den Deformationskörper bereitstellt, und dass das verdickte Ende Schubflächen für eine axiale Stauchung des Deformationskörpers aufweist, wobei für die axiale Stauchung des Deformationskörpers wenigstens ein Ausweichsraum zwischen der Einschnürung des hohlzylindrischen Rohres und dem verdickten Ende des Trägers vorgesehen ist.

Ein wesentliches Merkmal der Erfindung ist zunächst das Vorsehen eines verdickten Endes des Trägers, an dem Schubflächen für eine Schub-Deformation des Deformationskörpers vorgesehen sind. Das verdickte Ende weist eine Querschnittsfläche auf, die gegenüber der Querschnittsfläche des Axialabschnittes deutlich vergrössert ist, so dass sich beispielsweise eine im wesentlichen T-förmige Erweiterung des Axialabschnittes zu dem verdickten Ende hin ergibt. Aufgrund dieser Erweiterung mit damit einhergehender deutlicher Vergrösserung der Querschnittsfläche können Schubflächen bereitgestellt werden, die den Deformationskörper in gewisser Weise axial stauchen können, und auf diese Weise für eine Schub-Deformation sorgen.

Während der Stand der Technik durch das Vorsehen der verhältnismässig klein ausgelegten radialen Vorsprünge, die aus dem Material des Trägers herausgearbeitet sind, erreicht, dass die radialen Vorsprünge den Deformationskörper radial nach aussen erweitern und auf diese Weise katzenkrallenartig für eine Umwandlung der im Crashfall auftretenden kinetischen Energie des Trägers in Reibungsenergie sorgen, wird mit der erfindungsgemässen Lösung dafür gesorgt, dass sich der Deformationskörper als Ganzes verformt. Durch das Bereitstellen verhältnismässig grossflächiger Schubflächen, die an dem verdickten Ende des Trägers angeordnet sind, findet im Crashfall eine axiale Stauchung des Deformationskörpers statt, die für eine optimale Kraftweiterleitung innerhalb des Deformationskörpers und damit für eine optimale Umwandlung der kinetischen Energie in Verformungsenergie sorgt. Den Verformungsprozess kann man sich vorstellen derart, dass aufgrund der grossen, wirkenden Kräfte sich der Deformationskörper wie eine sehr zähflüssige Flüssigkeit verhält und in vorgesehene Ausweichräume hineinfliesst. Im Laufe des gesamten Verformungsvorgangs - angenommen, dass im Crashfall die kinetische Energie des Trägers derart hoch ist, dass der Deformationskörper vollständig verformt wird - fliessen dabei Werkstoffbereiche des Deformationskörpers entlang unterschiedlicher Richtungen. So können beispielsweise Ausweichräume nach Art von Schwächungszonen in Form von axialen Nuten am Deformationskörper vorgesehen sein, in die Werkstoffbereiche des Deformationskörpers hineingepresst werden, während der Deformationskörper axial gestaucht wird.

Der Deformationskörper verändert auf diese Weise seine geometrische Struktur völlig und fliesst nicht nur an dem verdickten Ende des Trägers vorbei, sondern quetscht sich auch durch den Bereich des rohrförmigen Körpers nahe der Einschnürung hindurch, der nicht eingeschnürt ist. Die Verformungen sind durch die Anordnung grossflächiger Schubflächen in Verbindung mit der Anordnung von Ausweichräumen, Schwächungszonen und/oder Rippen am Deformationskörper auf einfache Weise vorhersehbar. Insgesamt wird aufgrund der Tatsache, dass sich der Deformationskörper zugleich als Ganzes verformt, erreicht, dass ein hoher Anteil der kinetischen Energie in Verformungsenergie umgewandelt wird und auf diese Weise absorbiert wird.

Während zu Beginn der Crashsituation ein axiales, äusseres Ende des Deformationskörpers im Bereich der Einschnürung an dieser anliegt, drängt dieses bei einer fortwährenden Verlagerung des Trägers relativ zu der feststehenden Einschnürung nach aussen das Kunststoffmaterial im Bereich der Einschnürung radial nach aussen. Das verdickte Ende zerquetscht dabei den Deformationskörper zwischen sich und der Einschnürung, wobei der Deformationskörper in die vorhandenen Ausweichräume hineinfliesst.

Der Deformationskörper kann dabei in axialer Hinsicht beliebig lang ausgebildet sein und auf diese Weise auch sehr grosse kinetische Energien absorbieren.

Die erfindungsgemässe Lösung sieht darüber hinaus vor, dass der Deformationskörper fest an einem Axialabschnitt des Trägers angeordnet ist. Um ein verdicktes Ende mit ausreichend grossen Schubflächen bereitzustellen, die sich als Vergrösserung der Querschnittsfläche ausgehend vom Axialabschnitt hin zu dem verdickten Ende darstellen, ist erfindungsgemäss vorgesehen, dass der Deformationskörper an dem Axialabschnitt unmittelbar befestigt wird. Beispielsweise ist es in besonders vorteilhafter Weise vorgesehen, den Deformationskörper als Umspritzung des Axialabschnittes auszubilden. Es kann aber auch vorgesehen sein, den Deformationskörper mehrteilig, aus mehreren Bauteilen bestehend, auszubilden und diese unter Umgreifen des Axialabschnittes beispielsweise clipsend aneinander zu befestigen.

Das Prinzip der Erfindung besteht ausserdem darin, dass sich der Deformationskörper nicht zwingend an einem gesonderten Bauelement abstützen muss, sondern an der durch eine Sickenverprägung des rohrförmigen Körpers gebildeten Einschnürung abstützen kann. Auf diese Weise kann die Zahl der Einzelteile reduziert werden, was eine preiswertere Herstellung und eine einfachere Montage ermöglicht.

Die erfindungsgemässe Ausgestaltung des Deformationskörpers derart, dass dieser durch eine Schubdeformation verformbar ist, sorgt nämlich dafür, dass der Körper ohne weiteres zerfliessen kann und das von der sickenartigen Einprägung bereitgestellte Widerlager grundsätzlich den Deformationskräften standhält. Vorteilhafterweise ist dabei die Einschnürung derart gewählt, dass im Bereich der Einschnürung Freiräume zwischen der Aussenmantelfläche des Trägers und der Innenmantelfläche des Rohres bestehen, mit anderen Worten die Einschnürung noch gewisse Ausweichräume bereitstellt. Durch diese zusätzlichen Ausweichräume wird auch ein Teil des Deformationskörpers im Crashfall hindurchfliessen.

Gemäss einer vorteilhaften Ausgestaltung der Erfindung ist der Axialabschnitt mit dem verdickten Ende einstückig-stoffschlüssig verbunden. Dies bietet die Möglichkeit einer besonders stabilen Ausgestaltung.

Gemäss einer weiteren vorteilhaften Ausgestaltung der Erfindung findet im Crashfall eine Verformung des Deformationskörpers im wesentlichen über seine gesamte axiale Länge statt. Bei dieser Ausgestaltung der Erfindung wird eine optimale Kraftverteilung im Crashfalle erreicht, da die Schubflächen die einwirkenden Kräfte über das gesamte Volumen des Deformationskörpers verteilen. Im Gegensatz zu dem Stand der Technik, von dem die Erfindung ausgeht, wird nicht nur im Bereich der konischen Erweiterung des verdickten Endes eine Verformung des Deformationskörpers radial nach aussen erreicht, sich die radialen Vorsprünge an der Innenwand und des Deformationskörpers entlanggraben, sondern es wird im Crashfall ein wesentlicher Teil des gesamten Volumens des Deformationskörpers vor den Schubflächen hergeschoben und dabei mehrfach verformt.

Gemäss einer weiteren vorteilhaften Ausgestaltung der Erfindung ist der Deformationskörper von einer Umspritzung des Axialabschnittes gebildet. Auf diese Weise wird eine besonders einfache Bauweise des Halters und des Deformationskörpers erreicht, da diese vormontiert, zu einer Einheit zusammengefasst, in dem rohrförmigen Körper zur Montage eingesetzt werden können.

Gemäss einer weiteren vorteilhaften Ausgestaltung der Erfindung ist vorgesehen, dass an dem Träger Präge-Widerlagerflächen belassen sind. Das Vorsehen von Präge-Widerlagerflächen bietet den Vorteil, dass die Anordnung der Einschnürung durch Anbringung einer Sicke in dem rohrförmigen Körper auf besonders einfache Weise durchführbar ist, wobei der vorzugsweise aus Stahl bestehende Träger geeignete Widerlagerflächen für diesen Prägevorgang bereitstellt. Vorzugsweise sind die Präge-Widerlagerflächen unmittelbar von einer Aussenseite des Trägers gebildet, so dass diese nicht von einer Kunststoff-Umspritzung mit überdeckt sind und während des Anbringens der Sicke eine Beschädigung des Deformationskörpers vollständig ausgeschlossen wird.

Gemäss einer weiteren vorteilhaften Ausgestaltung der Erfindung besteht der Deformationskörper aus wenigstens zwei Bauteilen. Bei dieser Ausführungsform, die insbesondere vorsieht, dass zwei schalenförmige Bauteile vorgesehen sind, die aneinander durch Clipse befestigbar sind und den Axialabschnitt auf diese Weise umgreifen, besteht der Vorteil, dass der Deformationskörper auf besonders einfache Weise hergestellt und an dem Axialabschnitt befestigbar ist.

Sowohl die Anordnung eines Deformationskörpers durch Bildung einer Umspritzung als auch ein aus mehreren, gegebenenfalls zusammenclipsbaren Bauteilen bestehender Deformationskörper erleichtern die Handhabung des zu einer Einheit zusammengefassten Funktionselementes von Deformationskörper und Träger.

Gemäss einer weiteren vorteilhaften Ausgestaltung der Erfindung weist der Deformationskörper wenigstens eine Rippe auf, die sich insbesondere im wesentlichen über die gesamte Länge des Axialabschnittes erstreckt. Das Vorsehen wenigstens einer axialen Rippe an dem Deformationskörper sorgt für ein sehr genau definierbares zu verformbares Volumen des Deformationskörpers im Crashfall. Das Anbringen einer Rippe sorgt zugleich dafür, dass auch wenigstens ein zweiter Ausweichraum für Werkstoffbereiche des Informationskörpers im Crashfall vorgesehen sind. Die neben der axialen Rippe zwangsläufig vorgesehenen seitlichen Freiräume stellen Ausweichräume durch Ausbildung von Schwächungszonen zur Verfügung, in die Werkstoffbereiche der Rippe bei Verformung und axialer Stauchung des Deformationskörpers hineinfliessen können.

Gemäss einer weiteren vorteilhaften Ausgestaltung der Erfindung ist ein zweiter Ausweichraum durch Anordnung von zumindest einer axial verlaufenden Nut an dem Deformationskörper vorgesehen. Die Anbindung von derartigen Nuten stellt in ihrer Grösse sehr genau definierte Ausweichräume bereit, die im Falle einer Verformung des Deformationskörpers die verdrängten Werkstoffbereiche des Deformationskörpers aufnehmen können.

Gemäss einer besonders vorteilhaften Ausgestaltung der Erfindung entspricht die Querschnittsfläche des verdickten Endes wenigstens dem 1,3-fachen der Querschnittsfläche des Axialabschnittes. Etwa ab diesem Verhältnis von Querschnittsfläche des verdickten Endes zur Querschnittsfläche des Axialabschnittes werden genügend grosse Schubflächen bereitgestellt, die für eine Schub-Deformation des Deformationskörpers sorgen können. Bei einer optimalen Ausgestaltung der Erfindung entspricht die Querschnittsfläche des verdickten Endes ungefähr dem Doppelten der Querschnittsfläche des Axialabschnittes. Selbstverständlich kann durch Veränderung des Verhältnisses zwischen Querschnittsfläche des verdickten Endes und der Querschnittsfläche des Axialabschnittes bzw. in entsprechender Weise durch eine axiale Verlängerung oder Verkürzung des Deformationskörpers in Verbindung mit der Anbringung in ihrer Grösse im Querschnitt wählbarer Rippen oder Nuten für eine optimale Umwandlung der kinetischen Energie des Trägers in Verformungsenergie gesorgt werden.

Weitere Vorteile der Erfindung ergeben sich aus den nicht zitierten Unteransprüchen sowie aus der nun folgenden Beschreibung mehrerer in Zeichnungen dargestellter Ausführungsbeispiele. In den Figuren zeigen:
- Fig. 1: schematisch in Ansicht ein Befestigungselement und ein Federelement einer Haltestange eines Kfz-Trennnetzes,
- Fig. 2: schematisch, in teilgeschnittener Ansicht die Anordnung aus Fig. 1 etwa gemäss Ansichtspfeil II mit angedeutetem Haltestangenrohr,
- Fig. 3: die Anordnung gemäss Fig. 1 in teilgeschnittener, schematischer Ansicht etwa entlang Schnittlinie lll - lll,
- Fig. 4: einen Querschnitt durch die Anordnung etwa entlang Schnittlinie IV - lV in Fig. 3,
- Fig. 5: einen Querschnitt durch die Anordnung etwa entlang Schnittlinie V - V in Fig. 3,
- Fig. 6: ein zweites Ausführungsbeispiel der Erfindung etwa in einer Darstellung gemäss Fig. 3,
- Fig. 7: einen Schnitt durch die Anordnung gemäss Fig. 6 etwa entlang Schnittlinie VII - VII,
- Fig. 8: eine Schnittdarstellung etwa entlang Schnittlinie VIII - VIII in Fig. 6, und
- Fig. 9: ein drittes Ausführungsbeispiel in einer Darstellung gemäss Fig. 3.

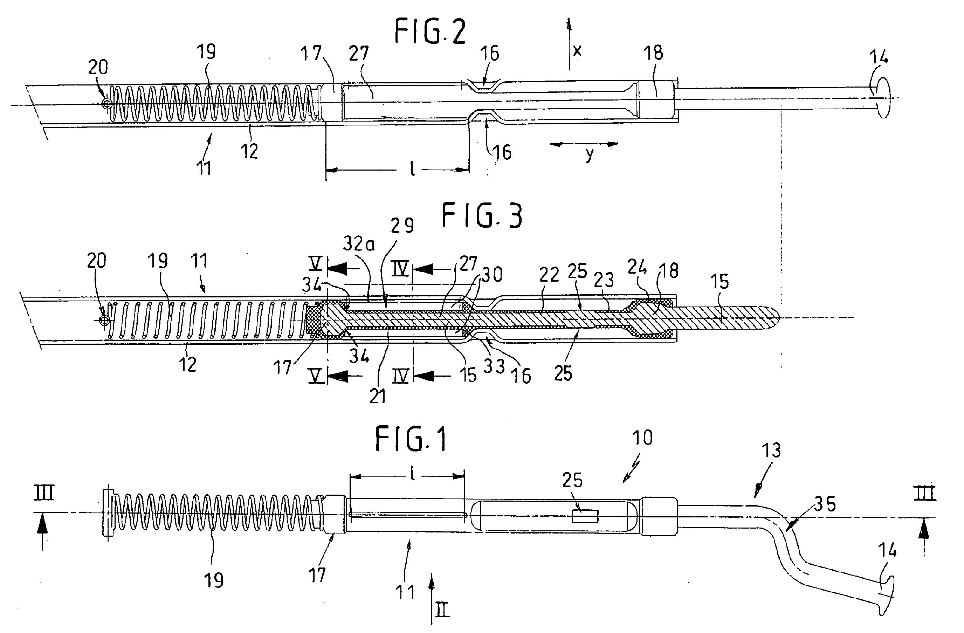

Das in seiner Gesamtheit in den Figuren mit 10 bezeichnete Trennnetz ist in den Figuren nicht dargestellt, kann aber beispielsweise dem in Fig. 1 der EP 0 649 778 B1 dargestellten Trennnetz entsprechend ausgestaltet sein. Eine nicht dargestellte untere Haltestange ist beispielsweise in einem Gehäuse angeordnet, welches an einer Kfz-Fondlehne befestigt sein kann und eine obere Haltestange 11 dient als Auszugselement, also als Auszugsstange, und wird an ebenfalls nicht dargestellten kfzseitigen Befestigungsanordnungen angebracht. Fig. 3 zeigt einen abgebrochen rohrförmigen Körper 12, der die Zugstange 11 ausbildet. Dargestellt ist nur der bezogen auf das Kfz, seitlich äussere Bereich, so dass sich ein Betrachter der Figuren 1 bis 3 sowie 6 die Haltestange bezüglich der Figuren nach links weitergehend vorstellen muss. Dargestellt ist jeweils nur derjenige Bereich der Haltestange 11, der einen Halter 13 axial verschieblich entlang dem Doppelpfeil y (also quer zur Fahrtrichtung x des Kfz) aufnimmt.

Beim Ausführungsbeispiel gemäss Fig. 1, welches der Übersichtlichkeit halber das Rohr 12 nicht zeigt, ist der Halter 13 im wesentlichen axial langgestreckt ausgebildet und erstreckt sich etwa von dem mit dem Bezugszeichen 17 bezeichneten, inneren Ende bis zu einem pilzkopfartig verbreiterten Ende 14. Das pilzkopfartige Ende 14 dient beispielsweise der Aufnahme in nicht dargestellten fahrzeugseitigen Aufnahmenuten, die hinterschnitten sind und im Bereich der C-Säule oder des Dachhimmels des Kfz angeordnet sein können. Die Ausgestaltung des Befestigungselernentes 14 ist hinsichtlich seiner Geometrie selbstverständlich frei wählbar.

Um die nicht dargestellten fahrzeugseitigen Befestigungsöffnungen für das Befestigungselement 14 ohne weiteres erreichen zu können, und auch um fahrzeugseitige Toleranzen ausgleichen zu können, ist der Halter 13 innerhalb des Rohres 12 axial über einen gewissen Bereich verschieblich, federbelastet, aufgenommen. Um ein Lösen des Halters 13 von dem Rohr 12 zu verhindern, wird zunächst auf eine sickenartige Einprägung 16 hingewiesen, die unmittelbar an dem Rohr 12 vorgenommen wird, nachdem der Halter - genügend tief - in den Innenraum des Rohres 12 hinein eingeführt worden ist. Das innere, verdickte Ende 17 des Trägers 15 für das Befestigungselement 14 ist dabei einwärts der Einschnürung 16 angeordnet, so dass die Einschnürung 16 einen Formschluss gewährleisten würde.

Beim Ausführungsbeispiel ist der Träger 15 einstückig-stoffschlüssig mit dem Befestigungselement 14 verbunden, was jedoch nicht zwingend der Fall sein muss. Bei dem Ausführungsbeispiel besteht der Träger 15 aus einem einstückigen massiven Bauteil aus Stahl. Der Träger 15 weist dabei eine erste Verdickung 17 (inneres, verdicktes Ende 17) und eine äussere Verdickung 18 (äusseres Ende 18) auf, wobei die sickenartige Einschnürung 16 zwischen den beiden Enden 17, 18 liegt.

Die axiale Verschieblichkeit des Trägers 15 innerhalb des Rohres 12 wird hinsichtlich einer Einwärts-Bewegung durch den abgekröpften Bereich 35 begrenzt, also durch ein Anschlagen des abgekröpften Bereiches 35 an der Mündungsseite des Rohres 12. Gleichermassen wird das Einwärtsfahren des Trägers 15 auch durch das Anschlagen des äusseren Endes 18 an der Einschnürung 16 mit begrenzt. Ein Ausfahren des Trägers 15 für den Halter 13 wird bei normalen Belastungen, also nicht im Crashfall, durch ein Anschlagen eines konischen Abschnittes 33 eines Deformationskörpers 29 an die sickenartige Einschnürung 16 begrenzt.

Ein Federelement 19 ist zwischen dem inneren Ende 17 des Trägers 15 und einer Abstützung 20 für das Federelement 19 positioniert. Die Abstützung 20 ist dabei beispielsweise als Splint angeordnet und unmittelbar an dem Rohr 12 befestigt.

Der aus Stahl bestehende Träger 15 ist von einer Umspritzung aus Kunststoff umgeben, die einen ersten Abschnitt 21 aufweist, der den Deformationskörper 29 bildet und einen Axialabschnitt 27 des Trägers 15 umgreift. Die Umspritzung 21 erstreckt sich darüber hinaus entlang einem zweiten Umspritzungsabschnitt 22, der jedoch einen geringeren radialen Durchmesser aufweist und nicht Bestandteil des Deformationskörpers 29 ist. Nach einer Unterbrechung schliesst sich bezüglich Fig. 3 darüber hinaus ein dritter Abschnitt 23 einer Umspritzung an, die schliesslich in eine buchsenartige Ummantelung 24 des äusseren Endes 18 des Trägers 15 mündet.

Die Umspritzung ist beispielsweise aus Polyamid, gegebenenfalls kurzfaserverstärkt, aus GFK-verstärktem Kunststoff oder aus einem Elastomer gebildet.

Der Träger 15 ist hinsichtlich seiner gesamten axialen, innerhalb des Innenraumes des Rohres 12 gemäss Fig. 3 angeordneten Länge umspritzt, wobei lediglich Präge-Widerlagerflächen 25 belassen sind. Die Präge-Widerlagerflächen 25 sind einander gegenüberliegend angeordnet und dienen einer besonders einfachen Anbringung der Sicke 16. Hierzu muss der Halter 15 lediglich derartig weit in das Rohr 12 eingeschoben werden, dass die Widerlagerflächen 25 axial dort positioniert werden, wo durch Sickeneinprägung die Einschnürung 16 erzeugt werden soll. Besondere Hilfsmittel müssen bei dem Verformungsvorgang dabei nicht vorgenommen werden, wobei der aus Stahl bestehende Träger 15 ein hinreichendes Widerlager für die Verformungskräfte beim Erzeugen der Sicke 16 bereitstellt und die Fertigungstoleranzen somit auf einfache Weise handhabbar sind.

Der Träger 15 ist im Bereich der Präge-Widerlagerflächen 25 darüber hinaus, wie Fig. 3 erkennen lässt, geringfügig dicker ausgebildet als in seinen benachbarten Bereichen, die von der Umspritzung 21, 22 und 23 umgeben sind. Auf diese Weise wird die Aussenseite des Trägers über einen sehr grossen axialen Abschnitt insgesamt bündig ausgebildet.

Im Folgenden soll der von dem Umspritzungsabschnitt 21 gebildete Deformationskörper 29 im Detail beschrieben werden:

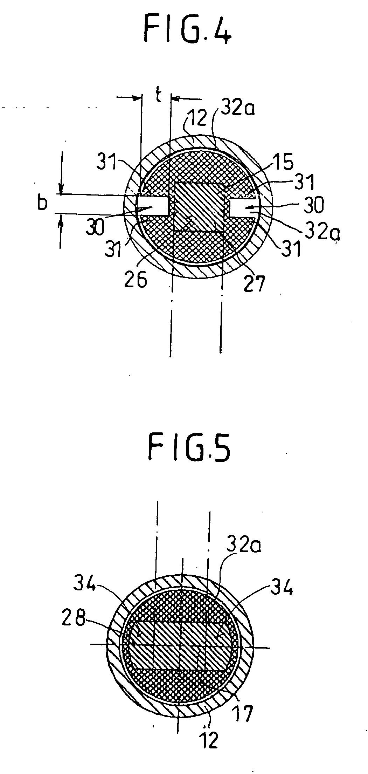

Gemäss Fig. 4 ist der Deformationskörper 29 vorzugsweise entlang dem gesamten Axialabschnitt 27 des Trägers 15 gleich ausgebildet, so dass sich eine Querschnittsansicht gemäss Fig. 4 ergibt. Es wird deutlich, dass der Träger 15 im Bereich des Axialabschnittes 27 einen quadratischen Querschnitt aufweist, und nahezu vollständig von Kunststoffmaterial umgeben ist. Zwei axiale Nuten 30 sind radial nach innen zurückspringend vorgesehen und stellen auf diese Weise einen Ausweichraum 32b nach Art einer Schwächungszone für die Kunststoffmasse bereit. Durch das Vorsehen der axialen Nuten 30 sind an den Randbereichen der Nuten 30 entsprechende rippenartige Vorsprünge 31 gebildet.

Zwischen der Aüssenmantelfläche des Deformationskörpers 29 und der Innenmantelfläche des Rohres 12 befindet sich gemäß Fig. 4 ein weiterer radialer Ausweichraum 32a.

Fig. 5 zeigt einen Querschnitt durch das innere verdickte Ende 17 des Trägers 15. Im Vergleich zur Fig. 4 wird bereits deutlich, dass die Querschnittsfläche 28 des verdeckten Endes 17 deutlich grösser ist als die Querschnittsfläche 26 des Trägers 15 im Bereich des Axialabschnittes 27. Im Gegensatz zu dem Stand der Technik findet auf diese Weise eine tatsächliche Querschnittserweiterung statt, und nicht nur eine Vergrösserung der Hüllkurven des Axialabschnittes relativ zu dem verdickten Ende.

Die Differenzflächen, also die den Querschnitt vergrössernden Flächen stellen Schubflächen 34 bereit, deren Funktion im Folgenden erläutert wird:

Der Deformationskörper liegt im Crashfall zunächst mit dem Konusabschnitt 33, der ebenfalls Bestandteil der Umspritzung ist, an der Sicke 16 an. Wird der Träger 15 bezüglich Fig. 3 nun zunehmend nach rechts aufgrund der grossen, im Crashfall auftretenden Kräfte aus dem Rohr 12 herausgezogen, findet eine Verformung des Deformationskörpers 29 derart statt, dass die Schubflächen 34 für eine vollständige Verformung durch axiale Stauchung des Deformationskörpers sorgen. Dabei werden Werkstoffbereiche des Deformationskörpers 29, beispielsweise die Rippen 31, in die dafür vorgesehenen Ausweichräume 32a und 32b hineingedrängt. Der Deformationskörper 29 zerfliesst auf diese Weise, wobei die Flussrichtungen des Werkstoffes durch die Ausweichräume gewissermassen vorgegeben sind, eine Komprimierung stattfinden muss, weil sich die Schubflächen 34 fortwährend der Einschnürung 16 annähern müssen. Schliesslich fliessen bereits mehrfach verformte und in unterschiedliche Richtungen gedrängte Werkstoffbereiche des Deformationskörpers 29 auch, aber nicht nur durch den Zwischenraum zwischen der Aussenmantelfläche des verdickten Endes 17 und der Innenumfangsfläche des Rohres 12 ab, so dass sich die Schubflächen 34 zunehmend an die Einschnürung 16 heranarbeiten können. Gleichermassen drängt verfliessender Kunststoff auch durch im Bereich der sickenartigen Einschnürung 16 belassene Freiräume.

Durch das Vorsehen der Schwächungszonen innerhalb des Deformationskörpers 29, also durch das Vorsehen von Ausweichräumen 32b findet eine Leitung eines Stromes des Kunststoffmaterials des Deformationskörpers 29 in axialer und radialer Weise statt, wobei die Gesamtbewegung eine zusammengesetzte Bewegung ist.

Das Vorsehen von axialen Nuten einer vorbestimmten Breite b und einer Tiefe t, mit anderen Worten also eine sehr genaue Dimensionierung des Ausweichraumes 32b bewirkt dabei eine sehr genau bestimmbare Verformung des Deformationskörpers 29. Gleichermassen, können die Rippen 31 entsprechend ausgestaltet werden.

Durch Vorsehen einer bestimmten axialen Länge I des Axialabschnittes 27 und damit einer vorbestimmten Länge von Rippen 31 oder Nuten 30 kann darüber hinaus für eine hervorragende Kraftverteilung während der Verformung des Deformationskörpers 29 gesorgt werden und die maximale, aufnehmbare kinetische Energie sehr gut einstellbar gewählt werden.

Die Ausbildung des Deformationskörpers 29 als Umspritzung 21 des Trägers 15 ist dabei nicht nur kostengünstig, sondern erlaubt auch besonders gute Toleranzen, zumal der Deformationskörper 29 auf diese Weise derart ausgelegt werden kann, dass in Verbindung mit den ebenfalls nur geringen Toleranzen unterliegenden Grössen der Schubflächen 34 für genau vorherbestimmbare Verhältnisse gesorgt ist, ohne dass es auf zwingend vorhandene Toleranzen beim Einbau des Halters 13, bei der Anbringung der Einschnürung 16 oder bei der Montage des Rohres ankommt.

Die zu einer Einheit zusammengefasste Anordnung von Deformationskörper 29 und Halter 15 derart, dass der Deformationskörper 29 in dem Halter 15 unmittelbar befestigt ist, sorgt für eine besonders gute Handhabbarkeit der Toleranzen, da die entscheidenden Flächenverhältnisse, die für eine Kontrollierbarkeit des Verformungsvorgangs wichtig sind, sehr genau vorbestimmt sind und keinen späteren Einbau, und Montagetoleranzen unterliegen.

Bei einer alternativen Ausgestaltung gemäss den Figuren 6 bis 8 ist der Deformationskörper 29 für den im wesentlichen unveränderten Träger 15 als zweiteiliges Bauelement ausgebildet. Der Deformationskörper 29' besteht gemäss Fig. 7 aus zwei Halbschalen, die als gesonderte Kunststoff-Spritzgussteile hergestellt werden und z. B. clipsend aneinander befestigt werden können. Die Clips-Befestigungselemente sind nicht gezeigt. Die Trennlinie zwischen den beiden Schalen kann aber beispielsweise entlang der Trennebenen a oder a' erfolgen.

Der geometrische Aufbau des Deformationskörpers 29' aus zwei schalenartigen Halbteilen 29a und 29b gemäss Fig. 7 ist zwar geringfügig verändert. Es sind jedoch wiederum radial nach innen vorstehende axiale Rippen 31 und entsprechende Nuten 30 vorgesehen, die sich im wesentlichen über die gesamte axiale Länge I des Axialabschnittes 27 erstrecken.

Der Axialabschnitt 27 weist eine hier im wesentlichen rechteckförmige Querschnittsfläche 26 auf, die den Bereich des inneren verdickten Endes 17 zu einer im wesentlichen kreisförmigen Querschnittsfläche 28 erweitert. Die Schubflächen 34 vergrössern die Querschnittsfläche 28 auf diese Weise wiederum deutlich gegenüber der Querschnittsfläche 26.

Fig. 9 zeigt schematisch ein drittes Ausführungsbeispiel der erfindungsgemässen Anordnung eines Deformationskörpers 29 innerhalb eines Rohres 12 einer Haltestange 11 eines Trennnetzes 10. Das dritte Ausführungsbeispiel entspricht nahezu identisch dem Ausführungsbeispiel der Fig. 3, wobei die Anordnung des Federelementes 19' beim Ausführungsbeispiel der Fig. 9 geringfügig verändert wurde.

Beim Ausführungsbeispiel der Fig. 9 ist der Träger 15 des Halters 13 nach innen, also bezüglich Fig. 9 nach links, geringfügig verlängert und führt zu einem Schaft 36. Das Federelement 19' ist zwischen zwei Ringscheiben 37a und 37b angeordnet, die beide von dem Schaft 36 durchgriffen werden. Eine zusätzliche Einschnürung 16', die ebenfalls als Sickenprägung vorgenommen worden ist, jedoch eine deutlich geringere Tiefe als die Sickeneinprägung 16 aufweist, sorgt für einen losen Halt des Ringkörpers 37b. Die zweite Ringscheibe 37a ist lose innerhalb des Rohres 12 verschieblich.

Die Feder 19' gemäss dem Ausführungsbeispiel der Fig. 9 wirkt als Druckfeder und sorgt dafür, dass der Halter 13 ständig nach innen vorgespannt ist. Das Federelement 19' stützt sich somit mit seinem rechten Ende in der Ringscheibe 37b als Widerlager ab.

Beim Ausführungsbeispiel der Fig. 3 ist das Federelement 19 ebenfalls als Druckfeder ausgebildet und sorgt ständig dafür, dass der Träger 15 und auch das Befestigungselement 14 nach aussen hin vorgespannt ist.

Die Vorspannrichtung, also eine Vorspannung nach aussen oder nach innen, ist beliebig wählbar. Gleichermassen kann eine Druckfeder durch eine Zugfeder selbstverständlich wahlweise ausgetauscht werden.

## Patentansprüche

1. Kfz-Sicherheitseinrichtung (10), insbesondere Trennnetz, mit einem Auszugselement (11), wie Zugstange, Endboard od. dgl., welches zumindest einen Abschnitt eines mit wenigstens einer Einschnürung (16) versehenen hohlzylindrischen Rohres (12) aufweist, mit einem darin axial verschieblich ein Träger (15) für ein Befestigungselement (14) zur fahrzeugseitigen Anbringung, und mit einem Deformationskörper (29, 29') zur Aufnahme kinetischer Energie im Crashfall, der fest an einem Axialabschnitt (27) des Trägers (15) angeordnet und mit diesem bewegungseinheitlich gekoppelt ist, wobei der Träger (15) ein verdicktes Ende (17) hat, **dadurch gekennzeichnet, dass** das verdickte Ende senkrecht zur Rohrachse gesehen eine gegenüber einer ersten Querschnittsfläche (26) des Axialabschnittes stark vergrößerte, zweite Querschnittsfläche (28) aufweist, dass im Crashfall die Einschnürung (16) unmittelbar ein Widerlager für den Deformationskörper (29, 29') bereitstellt, und dass das verdickte Ende (17) Schubflächen (34) für eine axiale Stauchung des Deformationskörpers (29, 29') aufweiset, wobei für die axiale Stauchung des Deformationskörpers wenigstens ein Ausweichsraum (32a, 32b) zwischen der Einschnürung des hohlzylindrischen Rohres und dem verdickten Ende des Trägers vorgesehen ist.

2. Kfz-Sicherheitseinrichtung nach Anspruch 1, **dadurch gekennzeichnet, dass** der Axialabschnitt (27) mit dem verdickten Ende (17) einstückig-stoffschlüssig verbunden ist.

3. Kfz-Sicherheitseinrichtung nach einem der Ansprüche 1 oder 2, **dadurch gekennzeichnet, dass** im Crashfall eine Verformung des Deformationskörpers (29, 29') im wesentlichen über seine gesamte axiale Länge (I) stattfindet.

4. Kfz-Sicherheitseinrichtung nach einem der Ansprüche 1 bis 3, **dadurch gekennzeichnet, dass** die Schubflächen (34) im Crashfall den Deformationskörper wenigstens partiell axial stauchen.

5. Kfz-Sicherheitseinrichtung nach einem der Ansprüche 1 bis 4, **dadurch gekennzeichnet, dass** der Deformationskörper von einer Umspritzung (21) des Axialabschnittes gebildet ist.

6. Kfz-Sicherheitseinrichtung nach einem der Ansprüche 1 bis 4, **dadurch gekennzeichnet, dass** der Deformationskörper (29') aus wenigstens zwei Bauteilen (29a, 29b) besteht.

7. Kfz-Sicherheitseinrichtung nach Anspruch 6, **dadurch gekennzeichnet, dass** die Bauteile (29a, 29b) im wesentlichen schalenförmig ausgebildet sind und unter Umgreifung des Axialabschnittes (27) unmittelbar aneinander befestigbar sind.

8. Kfz-Sicherheitseinrichtung nach Anspruch 6 oder 7, **dadurch gekennzeichnet, dass** die Bauteile aneinander clipsbar sind.

9. Kfz-Sicherheitseinrichtung nach einem der vorangegangenen Ansprüche, **dadurch gekennzeichnet, dass** an dem Träger (15) Präge-Widerlagerflächen (25) belassen sind.

10. Kfz-Sicherheitseinrichtung nach einem der vorangegangenen Ansprüche, **dadurch gekennzeichnet, dass** der Träger (15) aus Metall, insbesondere aus Stahl, und der Deformationskörper (29, 29') aus Kunststoff besteht.

11. Kfz-Sicherheitseinrichtung nach Anspruch 1, **dadurch gekennzeichnet, dass** ein erster Ausweichraum (32a) zwischen der Außenmäntelfläche des Deformätionskörpers (29, 29') und der Innenmantelfläche des rohrförmigen Körpers (12) angeordnet ist.

12. Kfz-Sicherheitseinrichtung nach einem der vorangegangenen Ansprüche, **dadurch gekennzeichnet, dass** der Deformationskörper wenigstens eine Rippe (31) aufweist, die sich insbesondere im wesentlichen über die gesamte Länge (I) des Axialabschnitts (27) erstreckt.

13. Kfz-Sicherheitseinrichtung nach einem der vorangegangenen Ansprüche, **dadurch gekennzeichnet, dass** wenigstens ein zweiter Ausweichraum (32b), insbesondere nach Art einer Schwächungszone, durch Anordnung von zumindest einer axial verlaufenden Nut (30) an dem Deformationskörper (29, 29') vorgesehen ist.

14. Kfz-Sicherheitseinrichtung nach einem der vorangegangenen Ansprüche, **dadurch gekennzeichnet, dass** die Querschnittsfläche (28) des verdickten Endes (17) wenigstens dem 1,3-fachen der Quersähnittsfläche (26) des Axialabschnittes (27) entspricht.

15. Kfz-Sicherheitseinrichtung nach einem der vorangegangenen Ansprüche, **dadurch gekennzeichnet, dass** die Querschnittsfläche (28) des verdickten Endes (17) ungefähr dem 2-fachen der Querschnittsfläche (26) des Axial abschnittes (27) entspricht.

## Claims

1. Motor vehicle safety device (10), in particular a separating net, having a pull-out element (11), such as a draw rod, end board or the like, which has at least a portion of a hollow-cylindrical tube (12) which is provided with at least one constriction (16), having a carrier (15) which is axially displaceable therein for a fixing element (14) for being fitted at the vehicle side, and having a deformation body (29, 29') for receiving kinetic energy in the event of a crash which is fixedly arranged on an axial portion (27) of the carrier (15) and which is connected thereto so as to be integral in terms of movement, the carrier (15) having a thickened end (17), **characterised in that** the thickened end has, when viewed perpendicularly relative to the tube axis, a second cross-sectional surface-area (28), which is substantially increased relative to a first cross-sectional surface-area (26) of the axial portion, **in that** the constriction (16) directly provides an abutment for the deformation body (29, 29') in the event of a crash, and **in that** the thickened end (17) has thrust faces (34) for axially compressing the deformation body (29, 29'), at least one expansion space (32a, 32b) being provided for the axial compression of the deformation body between the constriction of the hollow-cylindrical tube and the thickened end of the carrier.

2. Motor vehicle safety device according to claim 1, **characterised in that** the axial portion (27) is connected to the thickened end (17) in one piece in terms of material.

3. Motor vehicle safety device according to either claim 1 or claim 2, **characterised in that**, in the event of a crash, a deformation of the deformation body (29, 29') is brought about substantially over the entire axial length (1) thereof.

4. Motor vehicle safety device according to any one of claims 1 to 3, **characterised in that** the thrust faces (34) axially compress the deformation body at least partially in the event of a crash.

5. Motor vehicle safety device according to any one of claims 1 to 4, **characterised in that** the deformation body is formed by injection-moulding (21) around the axial portion.

6. Motor vehicle safety device according to any one of claims 1 to 4, **characterised in that** the deformation body (29') comprises at least two parts (29a, 29b).

7. Motor vehicle safety device according to claim 6, **characterised in that** the parts (29a, 29b) are constructed so as to be substantially shell-like and can be fixed directly to each other by engaging round the axial portion (27).

8. Motor vehicle safety device according to claim 6 or 7, **characterised in that** the parts can be clipped to each other.

9. Motor vehicle safety device according to any one of the preceding claims, **characterised in that** impressed abutment faces (25) are left on the carrier (15).

10. Motor vehicle safety device according to any one of the preceding claims, **characterised in that** the carrier (15) is composed of metal, in particular steel, and the deformation body (29, 29') is composed of plastics material.

11. Motor vehicle safety device according to claim 1, **characterised in that** a first expansion space (32a) is arranged between the outer surface of the deformation body (29, 29') and the inner surface of the tubular member (12).

12. Motor vehicle safety device according to any one of the preceding claims, **characterised in that** the deformation body has at least one rib (31) which extends in particular substantially over the entire length (1) of the axial portion (27).

13. Motor vehicle safety device according to any one of the preceding claims, **characterised in that** at least a second expansion space (32b) is provided, in particular in the manner of a weakening zone, by provision of at least one axially extending groove (30) in the deformation body (29, 29').

14. Motor vehicle safety device according to any one of the preceding claims, **characterised in that** the cross-sectional surface-area (28) of the thickened end (17) corresponds at least to 1.3 times the cross-sectional surface-area (26) of the axial portion (27).

15. Motor vehicle safety device according to any one of the preceding claims, **characterised in that** the cross-sectional surface-area (28) of the thickened end (17) corresponds to about twice the cross-sectional surface-area (26) of the axial portion (27).

## Revendications

1. Dispositif de sécurité (10) pour véhicule automobile, en particulier filet de séparation, comportant un élément télescopique (11) tel qu'une tige de traction, une plaque terminale ou similaire, qui présente au moins un tronçon d'un tube (12) cylindrique creux pourvu d'au moins un étranglement (16), comportant un support (15) déplaçable axialement dans celui-ci pour un élément de fixation (14) destiné à être monté côté véhicule, et comportant un corps de déformation (29, 29') pour encaisser de l'énergie cinétique en cas de collision, lequel est agencé de manière solidaire sur un tronçon axial (27) du support (15) et est accouplé à celui-ci de manière à former une unité de mouvement, le support (15) ayant une extrémité renflée (17), **caractérisé en ce que** l'extrémité renflée, vue perpendiculairement à l'axe du tube, présente une deuxième superficie de section (28) fortement agrandie par rapport à une première superficie de section (26) du tronçon axial, **en ce qu'**en cas de collision, l'étranglement (16) fournit directement une contrebutée pour le corps de déformation (29, 29'), et **en ce que** l'extrémité renflée (17) présente des surfaces de poussée (34) pour un écrasement axial du corps de déformation (29, 29'), et pour l'écrasement axial du corps de déformation est prévu au moins un espace de dégagement (32a, 32b) entre l'étranglement du tube cylindrique creux et l'extrémité renflée du support.

2. Dispositif de sécurité pour véhicule automobile selon la revendication 1, **caractérisé en ce que** le tronçon axial (27) est relié d'un seul tenant par coopération de matières à l'extrémité renflée (17).

3. Dispositif de sécurité pour véhicule automobile selon la revendication 1 ou 2, **caractérisé en ce qu'**en cas de collision, une déformation du corps de déformation (29, 29') a lieu sensiblement sur toute sa longueur axiale (1).

4. Dispositif de sécurité pour véhicule automobile selon l'une des revendications 1 à 3, **caractérisé en ce qu'**en cas de collision, les surfaces de poussée (34) écrasent axialement le corps de déformation au moins partiellement.

5. Dispositif de sécurité pour véhicule automobile selon l'une des revendications 1 à 4, **caractérisé en ce que** le corps de déformation est formé par enrobage (21) par injection du tronçon axial.

6. Dispositif de sécurité pour véhicule automobile selon l'une des revendications 1 à 4, **caractérisé en ce que** le corps de déformation (29') est constitué par au moins deux composants (29a, 29b).

7. Dispositif de sécurité pour véhicule automobile selon la revendication 6, **caractérisé en ce que** les composants (29a, 29b) sont réalisés sensiblement en forme de coques et peuvent être fixés directement l'un à l'autre enveloppant le tronçon axial (27).

8. Dispositif de sécurité pour véhicule automobile selon la revendication 6 ou 7, **caractérisé en ce que** les composants peuvent être clipsés l'un à l'autre.

9. Dispositif de sécurité pour véhicule automobile selon l'une des revendications précédentes, **caractérisé en ce que** sur le support (15) sont épargnées des surfaces de contrebutées estampées (25).

10. Dispositif de sécurité pour véhicule automobile selon l'une des revendications précédentes, **caractérisé en ce que** le support (15) est en métal, en particulier en acier, et le corps de déformation (29, 29') est en matière plastique.

11. Dispositif de sécurité pour véhicule automobile selon la revendication 1, **caractérisé en ce qu'**un premier espace de dégagement (32a) est agencé entre la surface enveloppe extérieure du corps de déformation (29, 29') et la surface enveloppe intérieure du corps (12) tubulaire.

12. Dispositif de sécurité pour véhicule automobile selon l'une des revendications précédentes, **caractérisé en ce que** le corps de déformation présente au moins une nervure (31) qui s'étend en particulier sensiblement sur toute la longueur (1) du tronçon axial (27).

13. Dispositif de sécurité pour véhicule automobile selon l'une des revendications précédentes, **caractérisé en ce qu'**au moins un deuxième espace de dégagement (32b), en particulier à la manière d'une zone d'affaiblissement, est prévu sur le corps de déformation (29, 29') par l'agencement d'au moins une gorge (30) s'étendant axialement.

14. Dispositif de sécurité pour véhicule automobile selon l'une des revendications précédentes, **caractérisé en ce que** la superficie de section (28) de l'extrémité renflée (17) correspond à au moins 1,3 fois la superficie de section (26) du tronçon axial (27).

15. Dispositif de sécurité pour véhicule automobile selon l'une des revendications précédentes, **caractérisé en ce que** la superficie de section (28) de l'extrémité renflée (17) correspond approximativement à 2 fois la superficie de section (26) du tronçon axial (27).
